# FASCICULE DE BREVET EUROPEEN

(11) **EP 3 288 736 B1**
(45) Date de publication et mention de la délivrance du brevet: **13.03.2019**
(21) Numéro de dépôt: 16722311.4
(22) Date de dépôt: 26.04.2016
(51) Int. Cl.: B29B 11/16, F01D 5/28, B29L 31/08

(54) **AUBE MUNIE DE PLATEFORMES POSSEDANT UN RAIDISSEUR**
SCHAUFEL MIT BEREICHEN MIT EINER VERSTEIFUNG
BLADE COMPRISING LANDS WITH A STIFFENER

(30) Priorité: 29.04.2015 FR 1553849
(43) Date de publication de la demande: 07.03.2018
(73) Titulaire: SAFRAN AIRCRAFT ENGINES, 75015 Paris (FR)
(72) Inventeur: BERDOU, Caroline, Jacqueline, Denise, 77550 Moissy-Cramayel Cedex (FR); DE GAILLARD, Thomas, Alain, 77550 Moissy-Cramayel Cedex (FR)
(74) Mandataire: Cabinet Beau de Loménie
(86) Numéro de dépôt international: PCT/FR2016/050979
(87) Numéro de publication internationale: WO 2016/174343

(56) Documents cités:
- WO-A1-2013/079860
- WO-A1-2014/076408
- WO-A2-2013/104852

## Description

### DOMAINE DE L'INVENTION

Le présent exposé concerne une préforme pour une aube de turbomachine ainsi qu'une aube monobloc pouvant être formée au moyen d'une telle préforme, une roue aubagée et une turbomachine comprenant une telle aube.

Une telle préforme peut être utilisée pour réaliser des aubes comprenant des plateformes aérodynamiques munies d'un raidisseur. De telles aubes peuvent être notamment des aubes de soufflante d'un turboréacteur d'avion, pour ne citer que cet exemple.

### ETAT DE LA TECHNIQUE ANTERIEURE

Afin de réduire la masse des turboréacteurs d'avion, et donc de réduire la consommation de ces turboréacteurs, il est désormais connu de fabriquer certaines aubes du réacteur en matériau composite, bien plus léger que le métal traditionnellement utilisé jusqu'alors.

A cette fin, il est également connu aujourd'hui d'utiliser des techniques de tissage tridimensionnel afin d'obtenir des préformes fibreuses aboutissant à des aubes composites de très bonne qualité. Le document WO 2014/076408 décrit notamment un procédé de tissage d'une préforme fibreuse permettant d'obtenir de manière monobloc des aubes munies de plateformes intrados et extrados, ces plateformes étant d'épaisseur constante.

Toutefois, ces plateformes doivent répondre à un grand nombre d'exigences et assurer de nombreuses fonctions. De manière principale, de telles plateformes doivent assurer une fonction aérodynamique de définition et de canalisation de la veine d'écoulement de l'air dans le turboréacteur. Toutefois, elles doivent également assurer une tenue mécanique garantie pour toutes les phases de vol ainsi qu'une intégration cohérente dans l'environnement du moteur en évitant notamment d'introduire des perturbations dans la veine d'air en aval. Ainsi, la géométrie des plateformes doit être finement contrôlée, et ceci durant tout le fonctionnement du moteur, et quelle que soit la phase du vol.

Or, en particulier, lors de tests et simulations réalisées sur de telles aubes, les inventeurs ont constaté que différentes zones de ces plateformes issues d'un tissage 3D se déformaient de manière plus ou moins importante sous l'effet des efforts centrifuges s'exerçant lors du fonctionnement de la turbomachine. Les inventeurs ont notamment remarqué que la déformation d'une zone d'une plateforme est d'autant plus importante qu'elle présente un déport important par rapport à la pale.

Dès lors, ces plateformes présentent en fonctionnement des irrégularités de forme susceptibles de perturber la veine d'air et donc le rendement de la turbomachine. En outre, les inventeurs ont constaté que le fléchissement est dépendant, entre autres, de la longueur du porte-à-faux. Ainsi, le porte-à-faux étant différent entre les plateformes extrados et intrados de deux aubes consécutives, il en résulte une discontinuité de fléchissement à cet interface et un risque de chevauchement des plateformes.

Il existe donc un réel besoin pour une préforme, une aube, une roue aubagée et une turbomachine qui soient dépourvus, au moins en partie, des inconvénients inhérents aux systèmes connus précités.

### PRESENTATION DE L'INVENTION

Le présent exposé concerne une préforme pour une aube de turbomachine, comportant une préforme fibreuse principale, obtenue par tissage tridimensionnel et comprenant un premier tronçon longitudinal, apte à former un pied d'aube, un deuxième tronçon longitudinal, prolongeant vers le haut le premier tronçon longitudinal, apte à former une partie de pale, un premier tronçon transversal, s'étendant transversalement depuis la jonction entre les premier et deuxième tronçons longitudinaux, apte à former une première plateforme, dans laquelle la préforme comporte en outre au moins un raidisseur rapporté sur la préforme fibreuse principale le long d'au moins un segment du bord distal du premier tronçon transversal.

Grâce à une telle préforme, il est possible d'obtenir de manière monobloc une aube comprenant un pied d'aube, une partie de pale et au moins une plate-forme munie d'un raidisseur assurant une déformation plus régulière de la plate-forme sous l'effet de la force centrifuge au cours du fonctionnement de la turbomachine.

En effet, la présence de ce raidisseur permet de mieux solidariser les différentes zones de la plate-forme, et tout particulièrement les zones distales de la plate-forme, afin de tendre vers une uniformisation de leurs déformations radiales en bout de plate-forme. On moyenne ainsi en quelque sorte les déformations de la plate-forme, les zones habituellement fortement défléchies tirant vers l'extérieur les zones habituellement moins défléchies tandis que ces dernières retiennent vers l'intérieur les zones soumises à un déplacement important. Dès lors, la plate-forme conserve en fonctionnement un profil relativement régulier, ne perturbant pas ou peu la circulation de la veine d'air.

Grâce à cette préforme, on peut donc bénéficier des avantages d'une aube monobloc tissée 3D (gain de masse ; nombre de pièces réduit; montage et maintenance simplifiés etc.) tout en assurant une régularité aérodynamique de la veine d'air.

De plus, le fait de rapporter un tel raidisseur sur la préforme fibreuse principale, plutôt que de prolonger la plateforme par une bande tissée par exemple, permet de conserver la stratégie de tissage existante pour la préforme fibreuse principale, ce qui simplifie le tissage, offre une plus grande liberté dans le choix de la géométrie de la préforme en évitant d'affaiblir la structure de cette dernière.

Dans le présent exposé, les termes « longitudinal », « transversal », « inférieur », « supérieur » et leurs dérivés sont définis par rapport à la direction principale de l'aube considérée, le pied d'aube étant situé du côté inférieur de l'aube selon cette référence ; les termes « proximal », « distal » et leurs dérivés sont définis par rapport à la pale de l'aube ; les termes « axial », « radial », « tangentiel » et leurs dérivés sont quant à eux définis par rapport à l'axe principal de la roue comportant ces aubes, c'est-à-dire en général l'axe de la turbomachine. On entend par « plan axial » un plan passant par l'axe principal de la turbomachine et par « plan radial » un plan perpendiculaire à cet axe principal ; on entend par « plan longitudinal » un plan parallèle à la direction principale de l'aube et perpendiculaire à la direction d'extension du pied d'aube : un tel plan longitudinal est donc un plan radial dans le référentiel de la turbomachine. En outre, les termes « amont » et « aval » sont définis par rapport à la circulation de l'air dans la turbomachine.

Enfin, on entend par « tissage tridimensionnel » une technique de tissage dans laquelle des fils de trame circulent au sein d'une matrice de fils de chaîne de manière à former un réseau tridimensionnel de fils selon une armure tridimensionnelle : toutes les couches de fils d'une telle structure fibreuse sont alors tissées au cours d'une même étape de tissage au sein d'un métier à tisser tridimensionnel.

Dans certains modes de réalisation, le raidisseur est réalisé en matériau métallique. Un tel matériau métallique offre ainsi une rigidité importante.

Dans certains modes de réalisation, le raidisseur est réalisé en matériau composite. Un tel matériau composite, bien que généralement moins rigide que le métal, est plus léger que ce dernier. Le matériau du raidisseur sera donc choisi en fonction des besoins et contraintes particuliers d'une pièce donnée.

Dans certains modes de réalisation, le raidisseur s'étend sur au moins un tiers de la longueur du bord distal du premier tronçon transversal. Il peut par exemple être prévu uniquement dans les zones de la plateforme connaissant normalement les plus grandes déformations, c'est-à-dire celles les plus déportées par rapport à la pale.

Dans certains modes de réalisation, le raidisseur s'étend le long du bord distal du premier tronçon transversal au moins à partir de l'extrémité amont ou aval. En effet, dans le cas d'une plateforme extrados, ces extrémités amont et aval de la plateforme connaissent habituellement de fortes déformations.

Dans certains modes de réalisation, le raidisseur s'étend tout le long du bord distal du premier tronçon transversal. On équilibre ainsi les déformations et on rigidifie la plateforme sur toute sa longueur.

Dans certains modes de réalisation, le raidisseur est un clinquant possédant une section en U et enserrant le bord distal du premier tronçon transversal. Un tel clinquant est facile à fabriquer et à mettre en place.

Dans certains modes de réalisation, la patte supérieure et la patte inférieure du clinquant en U possèdent la même longueur. Toutefois, dans d'autres modes de réalisation, la patte inférieure pourrait avoir une longueur différente afin de limiter l'apparition de zones de fragilités. En particulier, la patte inférieure pourrait être plus longue que la patte supérieure afin de mieux répartir les efforts sur le clinquant.

Dans certains modes de réalisation, l'extrémité supérieure du clinquant s'engage dans un retrait formé dans la surface supérieure du premier tronçon transversal de telle sorte que la surface supérieure du clinquant affleure la surface supérieure du premier tronçon transversal. Ceci permet d'obtenir une surface de veine lisse à l'interface entre la plateforme et le clinquant. Un tel retrait peut être obtenu lors du tissage par des sorties de fils ou bien ultérieurement, notamment après consolidation, par usinage.

Dans certains modes de réalisation, l'extrémité inférieure du clinquant s'engage dans un retrait formé dans la surface inférieure du premier tronçon transversal de telle sorte que la surface inférieure du clinquant affleure la surface inférieure du premier tronçon transversal. Les mêmes options de formation sont disponibles pour ce retrait inférieur.

Dans certains modes de réalisation, le raidisseur est un caisson rapporté contre la surface inférieure du premier tronçon transversal. Grâce à cette forme en caisson, un tel raidisseur bénéficie d'une raideur importante. En outre, le caisson étant rapporté sous la plateforme, la conception du caisson est relativement libre : il peut notamment posséder une grande largeur, pour rigidifier la plateforme sur une plus grande surface, ou une grande épaisseur, pour bénéficier d'une raideur plus importante.

Dans certains modes de réalisation, le caisson possède une section polygonale. Il est de préférence creux, possédant ainsi une cavité interne. Toutefois, la section du caisson peut également être évolutive : ceci permet d'ajuster la raideur du raidisseur le long de la plateforme.

Dans certains modes de réalisation, le raidisseur possède une nervure axiale ou une encoche axiale configurée pour coopérer respectivement avec l'encoche axiale ou la nervure axiale d'un raidisseur de plateforme d'une aube voisine. On améliore ainsi l'étanchéité de la veine à l'interface entre les deux plateformes. En outre, un tel dispositif permet de réduire le risque de chevauchement d'une plateforme sur la plateforme voisine, en cas d'ingestion d'oiseau par exemple.

Dans certains modes de réalisation, le raidisseur est un rouleau autour duquel est enroulée l'extrémité distale du premier tronçon transversal. Dans un tel cas, il peut être nécessaire de prévoir le tissage d'une surlongueur à l'extrémité distale du tronçon transversal de la préforme fibreuse principale. Une cohésion importante est ainsi assurée entre la préforme fibreuse principale et le raidisseur.

Dans certains modes de réalisation, le rouleau est muni de piquants configurés pour s'enfoncer dans la surface fibreuse du premier tronçon transversal. A la manière d'un bigoudi à cheveux, l'accroche du rouleau avec la préforme principale est ainsi améliorée.

Dans certains modes de réalisation, le raidisseur possède une cavité interne axiale. Une telle cavité réduit la masse du raidisseur. Elle peut également servir à l'accroche d'un dispositif de fixation ou de retenue de la plateforme, tel un crochet ou une patte de retenue, équipant le rotor.

Dans certains modes de réalisation, la section du raidisseur est évolutive. De cette manière, il est possible de tenir compte de la géométrie de la plateforme pour compenser de manière plus optimisée les déformations de cette dernière. En particulier, une largeur évolutive permet de régler d'une part la raideur du raidisseur, et donc la transmission des efforts d'une zone à l'autre de la plateforme, et d'autre part de régler la masse ajoutée localement à la plateforme, et donc de régler localement les efforts centrifuges exercés sur la plateforme. En particulier, en ajoutant localement de la masse à une zone habituellement moins défléchies de la plateforme, on augmente l'intensité de la force centrifuge dans cette zone de telle sorte que cette dernière sera un peu plus défléchie et s'alignera plus facilement avec les zones voisines naturellement plus défléchies.

Dans certains modes de réalisation, la préforme fibreuse principale comprend un deuxième tronçon transversal, s'étendant transversalement depuis la jonction entre les premier et deuxième tronçons longitudinaux, dans le prolongement et à l'opposé du premier tronçon transversal, apte à former une deuxième plateforme, et dans laquelle la préforme comprend en outre un deuxième raidisseur rapporté sur la préforme principale le long d'au moins un segment du bord distal du deuxième tronçon transversal.

On comprend naturellement que toutes les caractéristiques évoquées ci-dessus au sujet du premier tronçon transversal peuvent se transposer au deuxième tronçon transversal. En particulier, le raidisseur du deuxième tronçon transversal peut être de nature identique ou différente au raidisseur du premier tronçon transversal.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme est du type interlock 3D. Toutefois, le tissage des surfaces externes de la préforme peut être essentiellement bidimensionnel, du type satin par exemple.

Le présent exposé concerne également une aube pour turbomachine, comprenant un pied d'aube, une partie de pale, s'étendant vers le haut depuis le pied d'aube, une plateforme, réalisée en matériau composite et s'étendant transversalement à la partie de pale au niveau de la jonction entre le pied d'aube et la partie de pale, dans laquelle la plateforme est munie d'un raidisseur s'étendant le long d'au moins un segment du bord distal de ladite plateforme.

On comprend que cette aube correspond à celle que l'on peut obtenir à l'aide de la préforme ci-dessus. Toutefois, une telle aube pourrait également être obtenue à partir de la préforme fibreuse principale décrite ci-dessus, le raidisseur étant rapporté sur la plateforme après consolidation de la préforme fibreuse principale. Dans un cas comme dans l'autre, toutes les caractéristiques et avantages décrits ci-dessus se transposent directement à cette aube, quelle que soit sa technique d'obtention.

Dans certains modes de réalisation, l'aube est réalisée de manière monobloc en matériau composite au moyen d'une préforme selon l'un quelconque des modes de réalisation précédents, ladite préforme ayant été mise en forme dans un moule et noyée dans une matrice.

Dans certains modes de réalisation, la matrice est de type organique. Il peut notamment s'agir d'une résine époxy.

Dans d'autres modes de réalisation, la matrice est du type céramique.

Dans certains modes de réalisation, le raidisseur est rapporté sur la plateforme.

Le présent exposé concerne également une roue aubagée pour turbomachine, comprenant une pluralité d'aubes selon l'un des modes de réalisation précédents.

Il peut s'agir d'une roue de rotor, telle une soufflante, dans laquelle les aubes sont disposées angulairement autour d'un moyeu tournant, ou d'une roue de stator, dans laquelle les aubes sont disposée angulairement au sein d'une virole fixe.

Le présent exposé concerne également une turbomachine, comprenant au moins une aube ou une roue aubagée selon l'un des modes de réalisation précédents.

Les caractéristiques et avantages précités, ainsi que d'autres, apparaîtront à la lecture de la description détaillée qui suit, d'exemples de réalisation de la préforme, de l'aube, de la roue aubagée et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un plan en coupe axiale d'une turbomachine selon l'invention.
La FIG 2 est un schéma partiel en coupe radiale d'une roue aubagée selon l'invention.
La FIG 3 est une vue partielle en perspective d'une aube selon un exemple de réalisation.
La FIG 4 est une vue en coupe du raidisseur selon le premier exemple.
La FIG 5 illustre de manière schématique la préforme correspondant à cet exemple d'aube avant sa mise en forme.
La FIG 6 illustre de manière schématique la préforme correspondant à cet exemple d'aube après sa mise en forme.
La FIG 7 est une vue en coupe du raidisseur selon une variante du premier exemple.
La FIG 8 est une vue en coupe du raidisseur selon une autre variante du premier exemple.
Les FIG 9 et 10 sont des vues partielles en perspective d'une aube selon un deuxième exemple de réalisation.
La FIG 11 est une vue partielle en perspective d'une aube selon un troisième exemple de réalisation.
La FIG 12 est un schéma illustrant une étape de fabrication de la préforme de l'aube de la FIG 11.
La FIG 13 est une vue en coupe axiale d'une roue aubagée selon le troisième exemple.

### DESCRIPTION DETAILLEE D'EXEMPLES DE REALISATION

Afin de rendre plus concrète l'invention, des exemples de réalisation sont décrits en détail ci-après, en référence aux dessins annexés. Il est rappelé que l'invention ne se limite pas à ces exemples.

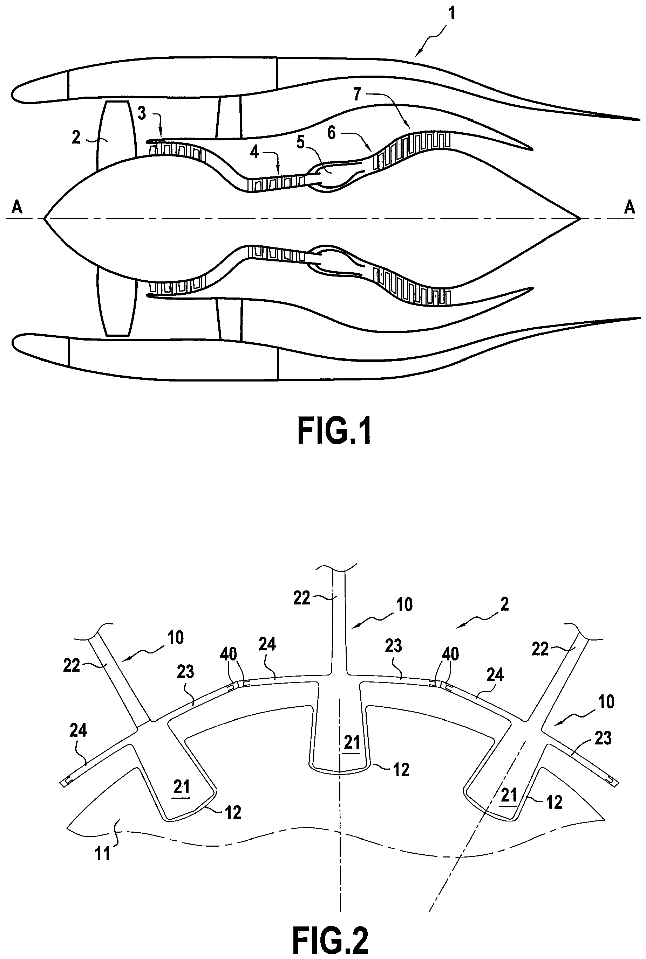

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

Comme cela est représenté sur la FIG. 2, la soufflante 2 est munie d'une pluralité d'aubes de soufflante 10 montées angulairement autour de l'axe A sur un disque 11 connecté à l'arbre basse pression de la turbomachine 1.

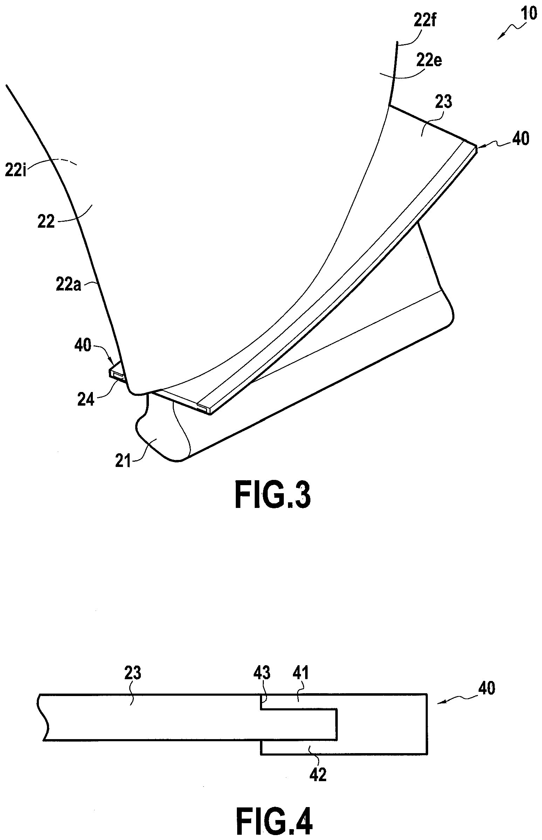

Une telle aube de soufflante est représentée sur la FIG. 3. Elle comprend un pied d'aube 21 en queue d'aronde configurée pour s'engager dans une rainure 12 du disque 11 afin de la fixer au disque 11. Ce pied d'aube 21 est prolongé vers le haut par une pale 22 présentant une face extrados 22e et une face intrados 22i s'entendant chacune d'amont en aval entre un bord d'attaque 22a et un bord de fuite 22f.

L'aube 10 comprend en outre une plateforme extrados 23, s'étendant transversalement du côté extrados de l'aube depuis la jonction entre le pied d'aube 21 et la pale 22, et une plateforme intrados 24, s'étendant transversalement du côté intrados de l'aube depuis la jonction entre le pied d'aube 21 et la pale 22.

A l'extrémité distale de chacune des plateformes 23, 24 est prévu un clinquant 40 formant raidisseur. Ce clinquant 40, mieux visible sur la FIG 4, est un profilé possédant une section transversale en U : il comporte une patte supérieure 41 et une patte inférieure 42 enserrant l'extrémité distale de la plateforme 23.

La surface supérieure de cette extrémité distale de la plateforme 23 présente un retrait 43 dont la profondeur correspond à l'épaisseur de la patte supérieure 41 du clinquant 40. Ainsi, lorsque le clinquant 40 est rapporté sur l'extrémité distale de la plateforme 23, sa patte supérieure 41 s'engage dans le retrait 43 de telle sorte que le clinquant 40 affleure la surface supérieure de la plateforme 23.

Dans cet exemple, l'aube 10 est obtenue de manière monobloc par tissage 3D d'une préforme fibreuse principale 30, mise en place des clinquants 40 sur cette préforme fibreuse principale 30 et injection d'une résine organique selon le procédé RTM connu de l'homme du métier.

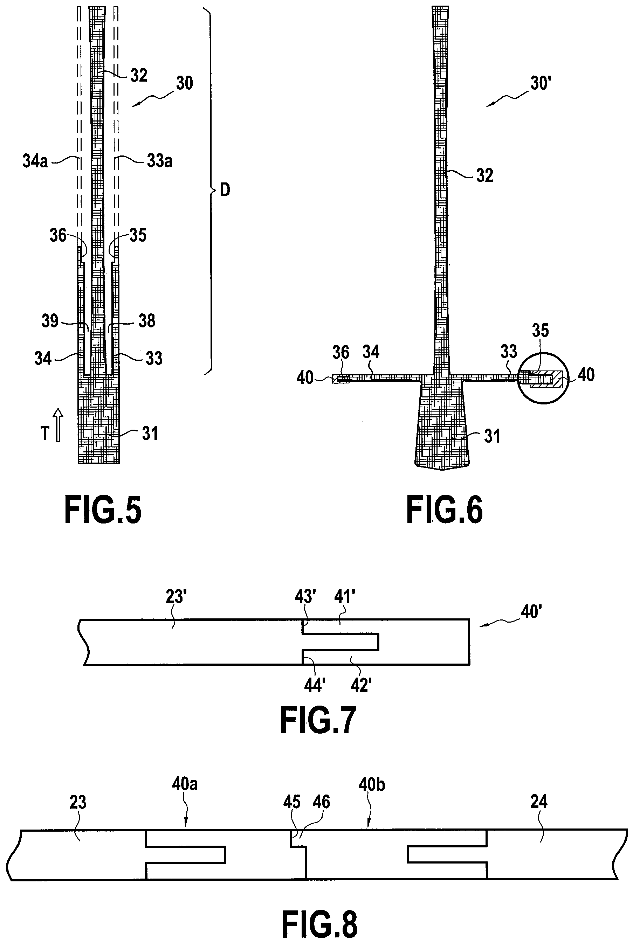

La FIG 5 représente cette préforme 30 tissée tridimensionnellement permettant de réaliser cet exemple d'aube 10. La FIG 6 représente la préforme finale 30' après sa mise en forme et mise en place des clinquants 40. Cette préforme 30 va être décrite de bas en haut, c'est-à-dire d'amont en aval dans la direction T de tissage. Il va toutefois de soi que le tissage pourrait être réalisé à partir de l'autre extrémité et dans l'autre sens.

Dans cet exemple de réalisation, la préforme 30 est tissée tridimensionnellement en fibres de carbone selon une armure interlock 3D. Seules les surfaces de la préforme 30 sont tissées bidimensionnellement selon une armure de type satin.

A l'extrémité inférieure, le tissage débute par la réalisation d'un premier tronçon longitudinal 31 qui formera le pied 21 de l'aube 10.

Au-dessus de ce premier tronçon longitudinal 31, débute une zone de déliaison D dans laquelle un premier pan libre 33a, un deuxième tronçon longitudinal 32, et un deuxième pan libre 34a sont tissés conjointement de manière déliée avec des plans de déliaison respectifs 38 et 39. Des méthodes de tissage permettant une telle déliaison sont désormais bien connues dans le domaine du tissage 3D.

Des sorties de couches peuvent en outre être réalisées le long du tissage T entre le deuxième tronçon longitudinal 32 et chacun des pans libres 33a, 34a afin d'affiner le deuxième tronçon longitudinal 32 et donc la future pale 22. Des méthodes de tissage permettant de telles sorties de couches sont désormais bien connues dans le domaine du tissage 3D.

Des sorties de couche 35 et 36 sont également réalisées à partir d'un certain niveau le long des pans libres 33a et 34a.

Une fois le tissage terminé, les pans libres 33a et 34a sont découpés de manière à former, pour le premier, un premier tronçon transversal 33 qui formera la plate-forme extrados 23 de l'aube 10 et, pour le second, un deuxième tronçon transversal 34 qui formera la plate-forme intrados 24 de l'aube 10.

Il faut noter ici que les qualificatifs « transversal » et « longitudinal » sont donnés en fonction de la position finale du tronçon considéré, les tronçons transversaux étant nécessairement tissés longitudinalement avant d'être repliés transversalement.

Une fois les pans libres 33a et 34a découpés, les fils flottés résultant des sorties de couches réalisées en surface du deuxième tronçon longitudinal 32 et des pans libres 33a, 34a sont accessibles et peuvent être rasés. Les sorties de couches 35 et 36 forment alors des retraits qui aboutiront aux retraits 43 de l'extrémité distale des plateformes 23, 24

La préforme 30 peut ensuite être humidifiée pour l'assouplir et permettre un décadrage plus aisé des fibres. La préforme principale 30 est alors introduite dans un moule de formage dont l'espace intérieur est ajusté à la géométrie recherchée pour la préforme 30.

On sèche ensuite la préforme 30 afin que celle-ci se raidisse, bloquant ainsi la géométrie imposée lors de la mise en forme. Comme cela est représenté à la FIG 6, les clinquants 40 sont alors rapportés à l'extrémité des tronçons transversaux de la préforme principale 30, leur patte supérieure s'engageant dans les retraits 35 et 36 de la préforme principale. La préforme ainsi complétée 30' est enfin disposée dans un moule d'injection, aux dimensions de l'aube finale souhaitée 10, dans lequel on injecte une matrice, ici une résine epoxy. Une telle injection peut par exemple être réalisée par le procédé connu RTM (« resin transfer molding »). Cette co-injection permet alors de solidariser les clinquants 40 sur la préforme principale 30 de telle sorte que, à l'issue de cette étape, on obtient de manière monobloc l'aube 10 en matériau composite munie des clinquants 40.

Naturellement, l'exemple de tissage décrit ci-dessus n'est qu'un exemple parmi de nombreux autres possibles que l'homme du métier reconnaîtra aisément. En particulier, il est possible d'imaginer d'autres déliaisons ou d'utiliser d'autres techniques de tissage tels des croisements de couches, des sorties de couches ou des transitions d'épaisseur pour obtenir une géométrie de préforme analogue. L'homme du métier trouvera notamment de nombreux exemples de tissages dans le document WO 2014/076408.

En outre, dans un autre exemple, la préforme principale 30 pourrait tout d'abord être consolidée seule par injection de la matrice puis les clinquants 40 pourraient être rapportés dans un deuxième temps par collage, rivetage, boulonnage ou tout autre méthode de fixation. Dans un tel cas, le retrait 43 pourrait être obtenu par usinage de la plateforme 23 après consolidation plutôt que par réalisation de sorties de couches lors du tissage.

Dans une première variante de réalisation, représentée à la FIG 7, la surface inférieure de l'extrémité distale de la plateforme 23' peut également présenter un retrait 44' dont la profondeur correspond à l'épaisseur de la patte inférieure 42' du clinquant 40'.

Dans une deuxième variante de réalisation, représentée à la FIG 8, les clinquants 40a des plateformes extrados 23 possèdent à leur extrémité distale une rainure 45 tandis que les clinquants 40b des plateformes intrados 24 possèdent à leur extrémité distale une nervure 46 capable de coopérer avec la rainure 45 du clinquant 40a voisin. Naturellement, la configuration inverse est possible.

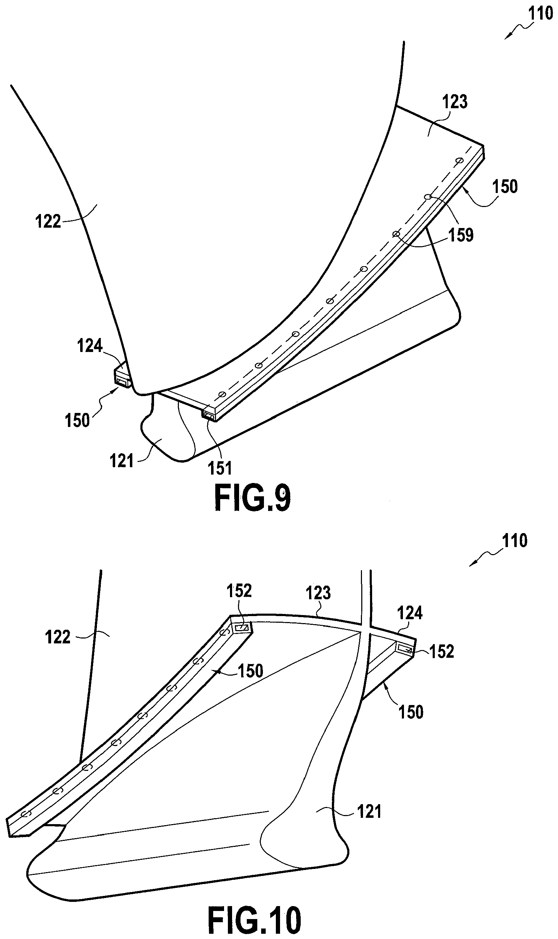

Les FIG 9 et 10 illustrent un deuxième exemple d'aube 110. Dans ce deuxième exemple, le raidisseur prend la forme d'un caisson 150 possédant une section rectangulaire ou trapézoïdale et s'étendant contre la surface inférieure des plateformes 123, 124, tout le long de l'extrémité distale. Ce caisson est creux sur toute sa longueur et forme ainsi des cavités 151 et 152 débouchant axialement en amont et en aval respectivement.

Une telle aube 110 peut être obtenue à l'aide d'un procédé de fabrication analogue à celui du premier exemple. Une préforme fibreuse principale analogue est ainsi tissée puis les caissons 150 sont rapportés contre la surface inférieure des tronçons transversaux de la préforme principale, par exemple à l'aide de rivets 159 ou de points de colle, la préforme complétée subissant alors une co-injection.

Alternativement, les caissons 150 peuvent être rapportés par collage, rivetage, boulonnage ou tout autre méthode sur une aube composite déjà consolidée issue par exemple de la préforme fibreuse principale 30 décrite plus haut.

De plus, on note qu'il est possible de doter ces caissons 150 d'un dispositif anti-chevauchement analogue à celui de la FIG 6, les caissons extrados portant par exemple une rainure et les caissons intrados une nervure correspondante.

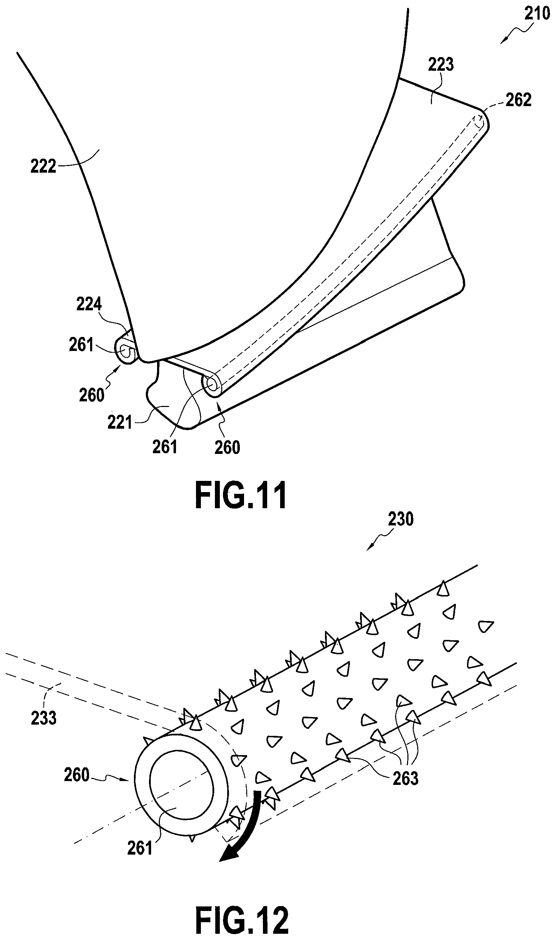

La FIG 11 illustre un troisième exemple d'aube 210. Dans ce troisième exemple, le raidisseur prend la forme d'un rouleau 260 possédant une section circulaire ou ovale et s'étendant tout le long de l'extrémité distale des plateformes 223, 224, enfermé dans l'épaisseur de ces dernières.

Comme cela est visible sur la FIG 12, ce rouleau 260 est creux sur toute sa longueur et forme ainsi des cavités 261 et 262 débouchant axialement en amont et en aval respectivement. Ce rouleau possède également des piquants 263 répartis sur sa surface extérieure.

La fabrication d'une telle aube 210 est analogue aux premier et deuxième exemples présentés ci-dessus. Une préforme fibreuse principale 230 est tout d'abord tissée de manière analogue aux exemples précédents en dotant toutefois les tronçons transversaux 233 d'une plus grande longueur.

Une fois le tissage de la préforme principale 230 terminé, les tronçons transversaux 233 sont rabattus transversalement puis l'extrémité distale de chaque tronçon transversal 233 est enroulée autour d'un rouleau 260 : les piquants 263 du rouleau s'enfoncent alors entre les fibres du tronçon transversal 233.

La préforme ainsi complétée est alors consolidée par injection d'une matrice de manière analogue aux exemples précédents.

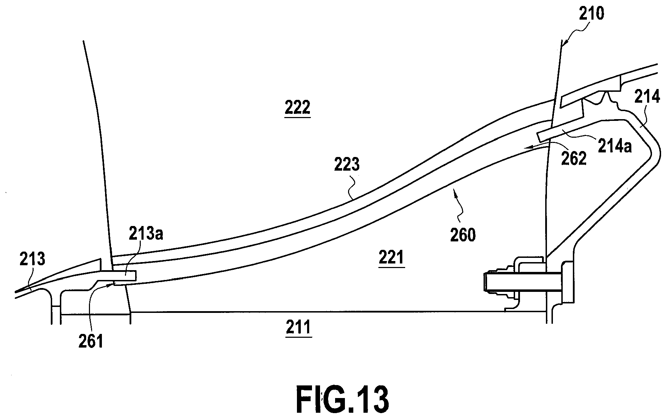

La FIG 13 illustre schématiquement en coupe axiale l'aube 210 monté sur le disque de soufflante 211. Sur cette FIG 13, la virole amont 213 et le tambour aval 214 de la soufflante 2 sont représentés : ces deux organes 213 et 214 sont situés au rotor et tournent donc de manière synchronisée avec le disque 211 et les aubes 210.

On note alors sur cette FIG 13 que la virole amont 213 est équipé d'une pluralité de doigts 213a s'engageant dans la cavité amont 261 des rouleaux 260 tandis que le tambour aval 214 est également équipé d'une pluralité de doigts 214a s'engagent quant à eux dans la cavité aval 262 des rouleaux 260, de tels dispositifs permettant de retenir les rouleaux 260 et donc d'éviter une déformation trop importante des plateformes 223 en fonctionnement.

On comprend d'ailleurs qu'un tel mécanisme de retenue est également possible avec les raidisseurs en forme de caisson 150 du deuxième exemple.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme pour une aube de turbomachine, comportant une préforme fibreuse principale (30), obtenue par tissage tridimensionnel et comprenant
un premier tronçon longitudinal (31), apte à former un pied d'aube (21),
un deuxième tronçon longitudinal (32), prolongeant vers le haut le premier tronçon longitudinal (31), apte à former une partie de pale (22),
un premier tronçon transversal (33), s'étendant transversalement depuis la jonction entre les premier et deuxième tronçons longitudinaux (31, 32), apte à former une première plateforme (23),
dans laquelle la préforme (30') comporte en outre au moins un raidisseur (40) rapporté sur la préforme fibreuse principale (30) le long d'au moins un segment du bord distal du premier tronçon transversal (33).

2. Préforme selon la revendication 1, dans laquelle le raidisseur est un clinquant (40) possédant une section en U et enserrant le bord distal du premier tronçon transversal (33).

3. Préforme selon la revendication 2, dans laquelle l'extrémité supérieure du clinquant (40) s'engage dans un retrait (35) formé dans la surface supérieure du premier tronçon transversal (33) de telle sorte que la surface supérieure du clinquant (40) affleure la surface supérieure du premier tronçon transversal (33).

4. Préforme selon la revendication 1, dans laquelle le raidisseur est un caisson (150) rapporté contre la surface inférieure du premier tronçon transversal.

5. Préforme selon l'une quelconque des revendications 1 à 4, dans laquelle le raidisseur (40a) possède une nervure axiale ou une encoche axiale (45) configurée pour coopérer respectivement avec l'encoche axiale ou la nervure axiale (46) d'un raidisseur (40b) de plateforme d'une aube voisine.

6. Préforme selon la revendication 1, dans laquelle le raidisseur est un rouleau (260), muni de préférence de piquants (263), autour duquel est enroulée l'extrémité distale du premier tronçon transversal (233).

7. Préforme selon l'une quelconque des revendications 4 à 6, dans laquelle le raidisseur (150) possède une cavité interne axiale (151, 152).

8. Préforme selon l'une quelconque des revendications 1 à 7, dans laquelle la préforme fibreuse principale (30) comprend un deuxième tronçon transversal (34), s'étendant transversalement depuis la jonction entre les premier et deuxième tronçons longitudinaux (31, 32), dans le prolongement et à l'opposé du premier tronçon transversal (33), apte à former une deuxième plateforme (24), et
dans laquelle la préforme (30') comprend en outre un deuxième raidisseur (40) rapporté sur la préforme fibreuse principale (30) le long d'au moins un segment du bord distal du deuxième tronçon transversal (34).

9. Aube pour turbomachine, comprenant
un pied d'aube (21),
une partie de pale (22), s'étendant vers le haut depuis le pied d'aube (21),
une plateforme (23), réalisée en matériau composite et s'étendant transversalement à la partie de pale (22) au niveau de la jonction entre le pied d'aube (21) et la partie de pale (22),
dans laquelle la plateforme (23) est munie d'un raidisseur (40) s'étendant le long d'au moins un segment du bord distal de ladite plateforme (23).

10. Aube selon la revendication 9, réalisée de manière monobloc en matériau composite au moyen d'une préforme (30') selon l'une quelconque des revendications 1 à 8, ladite préforme (30') ayant été mise en forme dans un moule et noyée dans une matrice, de préférence de type organique.

11. Aube selon la revendication 9, dans laquelle le raidisseur (40) est rapporté sur la plateforme (23).

12. Roue aubagée pour turbomachine, comprenant une pluralité d'aubes (10) selon l'une quelconque des revendications 9 à 11.

13. Turbomachine, comprenant au moins une aube (10) selon l'une quelconque des revendications 9 à 11 ou une roue aubagée (2) selon la revendication 12.

## Patentansprüche

1. Vorform für eine Schaufel einer Turbomaschine, umfassend eine faserige Hauptvorform (30), die durch dreidimensionales Weben erhalten wird, und umfassend
einen ersten Längsabschnitt (31), der dazu geeignet ist, einen Schaufelfuß (21) zu bilden,
einen zweiten Längsabschnitt (32), der sich in Richtung der Oberseite des ersten Längsabschnittes (31) erstreckt und dazu geeignet ist, einen Blattabschnitt (22) zu bilden,
einen ersten Querabschnitt (33), der quer von der Verbindung zwischen dem ersten und zweiten Längsabschnitt (31, 32) verläuft und dazu geeignet ist, eine erste Plattform (23) zu bilden,
wobei die Vorform (30') ferner mindestens eine Versteifung (40) umfasst, die auf der faserigen Hauptvorform (30) entlang mindestens eines Segments der distalen Kante des ersten Querabschnittes (33) angebracht ist.

2. Vorform nach Anspruch 1, wobei die Versteifung eine Folie (40) ist, die einen U-förmigen Querschnitt besitzt und die distale Kante des ersten Querabschnittes (33) umschließt.

3. Vorform nach Anspruch 2, wobei das obere Ende der Folie (40) eine Einrückung (35) in Eingriff nimmt, die in der Oberseite des ersten Querabschnittes (33) gebildet ist, sodass die Oberseite der Folie (40) bündig mit der Oberseite des ersten Querabschnittes (33) ist.

4. Vorform nach Anspruch 1, wobei die Versteifung ein Kasten (150) ist, der gegen die Unterseite des ersten Querabschnittes angebracht ist.

5. Vorform nach einem der Ansprüche 1 bis 4, wobei die Versteifung (40a) eine axiale Rippe oder eine axiale Kerbe (45) besitzt, die ausgestaltet ist, um jeweils mit der axialen Kerbe oder der axialen Rippe (46) einer Versteifung (40b) der Plattform einer benachbarten Schaufel zusammenzuwirken.

6. Vorform nach Anspruch 1, wobei die Versteifung eine Rolle (260) ist, die vorzugsweise mit Stacheln (263) versehen ist, um die herum das distale Ende des ersten Querabschnittes (233) gewickelt ist.

7. Vorform nach einem der Ansprüche 4 bis 6, wobei die Versteifung (150) einen axialen Innenhohlraum (151, 152) besitzt.

8. Vorform nach einem der Ansprüche 1 bis 7, wobei die faserige Hauptvorform (30) einen zweiten Querabschnitt (34) umfasst, der quer von der Verbindung zwischen dem ersten und zweiten Längsabschnitt (31, 32) verläuft, in Fortsetzung des ersten Querabschnittes (33) und entgegengesetzt dazu, und dazu geeignet ist, eine zweite Plattform (24) zu bilden, und
wobei die Vorform (30') ferner eine zweite Versteifung (40) umfasst, die auf der faserigen Hauptvorform (30) entlang mindestens eines Segments der distalen Kante des zweiten Querabschnittes (34) angebracht ist.

9. Schaufel für eine Turbomaschine, umfassend
einen Schaufelfuß (21),
einen Blattabschnitt (22), der von dem Schaufelfuß (21) nach oben verläuft,
eine Plattform (23), die aus Verbundmaterial hergestellt ist und quer zu dem Blattabschnitt (22) auf Höhe der Verbindung zwischen dem Schaufelfuß (21) und dem Blattabschnitt (22) verläuft,
wobei die Plattform (23) mit einer Versteifung (40) versehen ist, die entlang mindestens eines Segments der distalen Kante der Plattform (23) verläuft.

10. Schaufel nach Anspruch 9, die mittels einer Vorform (30') nach einem der Ansprüche 1 bis 8 einstückig aus Verbundmaterial hergestellt ist, wobei die Vorform (30') in einer Form in Form gebracht und in eine Matrize eingebettet worden ist, vorzugsweise vom organischen Typ.

11. Schaufel nach Anspruch 9, wobei die Versteifung (40) auf der Plattform (23) angebracht ist.

12. Schaufelrad für eine Turbomaschine, umfassend eine Vielzahl von Schaufeln (10) nach einem der Ansprüche 9 bis 11.

13. Turbomaschine, umfassend mindestens eine Schaufel (10) nach einem der Ansprüche 9 bis 11 oder ein Schaufelrad (2) nach Anspruch 12.

## Claims

1. A preform for a turbine engine blade, the preform comprising a main fiber preform (30) obtained by three-dimensional weaving and comprising:
- a first longitudinal segment (31) suitable for forming a blade root (21);
- a second longitudinal segment (32) extending the first longitudinal segment (31) upwards, and suitable for forming an airfoil portion (22); and
- a first transverse segment (33) extending transversely from the junction between the first and second longitudinal segments (31, 32), and suitable for forming a first platform (23);
wherein the preform (30') also includes at least a stiffener (40) fitted on the main fiber preform (30) along at least a portion of the distal edge of the first transverse segment (33).

2. A preform according to claim 1, wherein the stiffener is a metal shim (40) possessing a U-shaped section and gripping the distal edge of the first transverse segment (33) .

3. A preform according to claim 2, wherein the top end of the metal shim (40) engages in a setback (35) formed in the top surface of the first transverse segment (33) so that the top surface of the shim (40) is flush with the top surface of the first transverse segment (33).

4. A preform according to claim 1, wherein the stiffener is a box section (150) fitted against the bottom surface of the first transverse segment.

5. A preform according to any one of claims 1 to 4, wherein the stiffener (40a) possesses an axial spline or an axial notch (45) configured to co-operate respectively with the axial notch or the axial spline (46) of a stiffener (40b) of a platform of a neighboring blade.

6. A preform according to claim 1, wherein the stiffener is a cylinder (260), preferably provided with spikes (263), with the distal end of the first transverse segment (233) being wound around the cylinder.

7. A preform according to any one of claims 4 to 6, wherein the stiffener (150) possesses an axial internal cavity (151, 152).

8. A preform according to any one of claims 1 to 7, wherein the main fiber preform (30) has a second transverse segment (34) extending transversely from the junction between the first and second longitudinal segments (31, 32), level with and going away from the first transverse segment (33), and suitable for forming a second platform (24); and
wherein the preform (30') also has a second stiffener (40) fitted on the main fiber preform (30) along at least a portion of the distal edge of the second transverse segment (34).

9. A blade for a turbine engine, comprising:
- a blade root (21);
- an airfoil portion (22) extending upwards from the blade root (21); and
- a platform (23), made of composite material and extending transversely to the airfoil portion (22) level with the junction between the blade root (21) and the airfoil portion (22);
wherein the platform (23) has a stiffener (40) extending along at least a portion of the distal edge of said platform (23).

10. A blade according to claim 9, made in single-piece manner out of composite material by means of a preform (30') according to any one of claims 1 to 8, said preform (30') being shaped in a mold and embedded in a matrix, preferably of organic type.

11. A blade according to claim 9, wherein the stiffener (40) is fitted to the platform (23).

12. A bladed wheel for a turbine engine, having a plurality of blades (10) according to any one of claims 9 to 11.

13. A turbine engine, including at least a blade (10) according to any one of claims 9 to 11, or a bladed wheel (2) according to claim 12.
